# EUROPÄISCHE PATENTSCHRIFT

(11) **EP 1 570 422 B1**
(45) Veröffentlichungstag und Bekanntmachung des Hinweises auf die Patenterteilung: **16.05.2007**
(21) Anmeldenummer: 03775318.3
(22) Anmeldetag: 07.11.2003
(51) Int. Cl.: G06K 19/16, B42D 15/00, B42D 15/10, B44C 3/02

(54) **SCHICHTANORDNUNG MIT EINER EINEN LINSENARTIGEN EFFEKT ERZEUGENDEN BEUGUNGSOPTISCH WIRKSAMEN STRUKTUR**
LAYER ARRANGEMENT PROVIDED WITH A STRUCTURE PRODUCING A DIFFRACTIVE OPTICAL EFFECT AND A LENS-TYPE EFFECT
SYSTEME DE COUCHES PRESENTANT UNE STRUCTURE DE DIFFRACTION PRODUISANT UN EFFET DE TYPE LENTILLE

(30) Priorität: 22.11.2002 DE 10254499
(43) Veröffentlichungstag der Anmeldung: 07.09.2005
(73) Patentinhaber: OVD Kinegram AG, 6301 Zug (CH)
(72) Erfinder: SCHILLING, Andreas, CH-6332 Hagendorn (ZG) (CH); TOMPKIN, Wayne, Robert, CH-5400 Baden (CH)
(74) Vertreter: Zinsinger, Norbert
(86) Internationale Anmeldenummer: PCT/EP2003/012451
(87) Internationale Veröffentlichungsnummer: WO 2004/049250

(56) Entgegenhaltungen:
- EP-A- 1 152 369
- EP-A- 1 182 054
- WO-A-97/19820
- US-A- 4 714 656
- US-A- 4 765 656

## Beschreibung

Die Erfindung betrifft eine Schichtanordnung, insbesondere für Transfer- oder Laminierfolien, welche wenigstens zwei aufeinanderfolgende Materialschichten aufweist, von denen wenigstens die bei Gebrauch dem Betrachter zugekehrte(n) Schicht(en) transparent oder semi-transparent ist (sind) und zwischen denen eine Grenzfläche ausgebildet ist, welche wenigstens in einem Flächenbereich mit einer einen linsenartigen Vergrößerungs- oder Verkleinerungseffekt erzeugenden, beugungsoptisch wirksamen Struktur versehen ist.

In diesem Zusammenhang werden unter Transferfolien insbesondere sogenannte Prägefolien verstanden, die aus einem Trägerfilm und einer von diesem ablösbaren, auf ein Substrat zu übertragenden Transferschicht bestehen. Üblicherweise ist die Transferschicht von Prägefolien aus verschiedenen Lackschichten zusammengesetzt, was bedeutet, daß der in vorliegender Erfindung verwendete Begriff "Materialschicht" hauptsächlich im Sinne einer Lackschicht, fallweise aber auch im Sinne einer Kleberschicht, zu verstehen ist. Die Erfindung erfaßt aber auch Ausführungsformen, bei denen eine "Materialschicht" von der Umgebungsluft oder einer metallischen, dielektrischen oder Halbleiter-Beschichtung gebildet ist. Laminierfolien stimmen hinsichtlich ihres Aufbaus im wesentlichen mit Transferfolien überein, jedoch mit der Besonderheit, daß die Kunstharz- bzw. Lackschichten nicht von dem Trägerfilm ablösbar sind sondern gemeinsam mit dem Trägerfilm auf einem Substrat befestigt werden können. Transfer- oder Laminierfolien mit einer Schichtanordnung der erwähnten Art werden insbesondere für Sicherheitszwecke, aber auch für dekorative Zwecke verwendet.

Schichtanordnungen der eingangs beschriebenen Art sind bereits bekannt und werden beispielsweise in Form einer einheitlich erscheinenden Linse als Sicherheitselement bei bestimmten, neuerdings auf den Markt gebrachten Kreditkarten (Amex-Blue) verwendet. Bei diesen bekannten Kreditkarten hat der den linsenartigen Effekt zeigende Flächenbereich verhältnismäßig großen Durchmesser und im wesentlichen die Form einer Kreislinse. Bei der den linsenartigen Effekt erzeugenden, beugungsoptisch wirksamen Struktur der bekannten Schichtanordnung handelt es sich um eine mittels einer holographischen Technik erzeugte Struktur, die in der Regel sinusförmige Oberflächenprofile besitzt. Derartig holographisch hergestellte Linsen haben etliche Mängel, abgesehen davon, daß die holographische Herstellung von beugungsoptisch wirksamen Strukturen mit Linseneffekt mit vergleichsweise geringem apparativen Aufwand nur möglich ist, wenn es sich um Linsen mit kreisförmigem oder bestenfalls elliptischem Grundriß handelt. Ein Mangel der holographisch hergestellten Linsen ist beispielsweise, daß sie nicht allzu brillant erscheinen und im allgemeinen speziell im Zentrumsbereich Inhomogenitäten aufweisen, wodurch das visuelle Erscheinungsbild, das durch die Linse erzeugt werden soll, erheblich beeinträchtigt werden kann. Ein weiterer Mangel holographisch hergestellter Linsen ist der, daß es praktisch nicht möglich ist, bestimmte Farbeffekte mit relativ großer Gestaltungsfreiheit zu erzielen.

WO-A-97/19820 offenbart eine Schichtanordnung nach dem Oberbegriff des Anspruchs 1.

Der Erfindung liegt nun die Aufgabe zugrunde, eine Schichtanordnung der eingangs erwähnten Art vorzuschlagen, die die erwähnten Mängel der bekannten, holographisch erzeugten Linsenstrukturen mit sinusförmigem Oberflächenverlauf nicht aufweist, d.h, die den linsenartigen Effekt erzeugenden Strukturen derart zu gestalten, daß sie bei vertretbarem apparativen und Zeitaufwand sehr präzise und in unterschiedlichster Gestaltung hergestellt werden können, daß weiterhin die Effizienz und Leuchtkraft des durch die linsenartige Struktur erzielten Effekts gegenüber holographisch erzeugten Strukturen erheblich verbessert wird und daß schließlich zumindest eine gegenüber holographisch erzeugten Strukturen erheblich erweiterte Freiheit bezüglich der erzielten Farbeffekte besteht.

Zur Lösung dieser Aufgabe wird erfindungsgemäß vorgeschlagen, die den linsenartigen Effekt erzeugende, beugungsoptisch wirksame Struktur (nachfolgend stets "Linsenstruktur") derart auszubilden, daß sie eine sich hinsichtlich ihrer Gitterfrequenz und gegebenenfalls weiterer Gitterkonstanten über den Flächenbereich kontinuierlich verändernde Gitterstruktur ist, die entweder eine Binärstruktur oder derart gestaltet ist, daß die jeweils einen Flanken der Gitterfurchen der Gitterstruktur parallel zueinander und etwa parallel zu einer Senkrechten auf die Hauptebene der Grenzschicht verlaufen, während sich - zumindest über die gesamte Flanke gemittelt-der Winkel der jeweils anderen Flanken der Gitterfurchen gegenüber einer Senkrechten auf die Hauptebene der Grenzschicht über den Flächenbereich im wesentlichen kontinuierlich ändert, wobei die Gittertiefe (9) der Linsenstrukturen höchstens 10 µm beträgt.

Unter einer "Binärstruktur" ist gemäß vorliegender Beschreibung eine Struktur zu verstehen, bei der die Gittefurchen und Gitterstege jeweils im wesentlichen rechteckigen Querschnitt besitzen, wobei allerdings dann zur Erzeugung des Linseneffektes die Gitterkonstante sich vom Zentrum der Linse zu deren Rand hin kontinuierlich verändern muß, wobei im allgemeinen sowohl die Steg- als auch die Furchenbreite des binären Gitters verändert wird. Binärgitter lassen sich leicht unter Verwendung entsprechender Masken mit hinreichender Feinheit erzeugen, was einerseits in sehr hoher Genauigkeit sowie andererseits in vergleichsweise niedrigen Herstellungskosten resultiert.

Die andere, beanspruchte Ausführungsform von Gitterstrukturen wird vorzugsweise im Wege des sogenannten "Direktschreibens" mittels Laser- oder Elektronenstrahl-Lithographiemaschinen erzeugt, bei deren Verwendung es leicht möglich ist, ganz bestimmte Gitterstrukturen zu erzeugen und insbesondere die beanspruchte Struktur, wonach eine Flanke der entsprechenden Gitterfurchen jeweils etwa senkrecht zur Hauptebene des die Linse bildenden Gitters verläuft, während die andere Flanke unter Verjüngung der Gitterfurche zum Boden der Furche hin schräg angeordnet ist. In diesem Zusammenhang ist es auch möglich, die schräge Flanke nicht als kontinuierliches Profil auszubilden sondern über eine stufenartige Gestaltung anzunähern, wobei für eine Vielzahl von Anwendungsfällen bereits eine Aufteilung in vier oder acht Stufen genügt. Es ist aber bei hohen Qualitätsanforderungen auch möglich beispielsweise 64 Stufen vorzusehen.

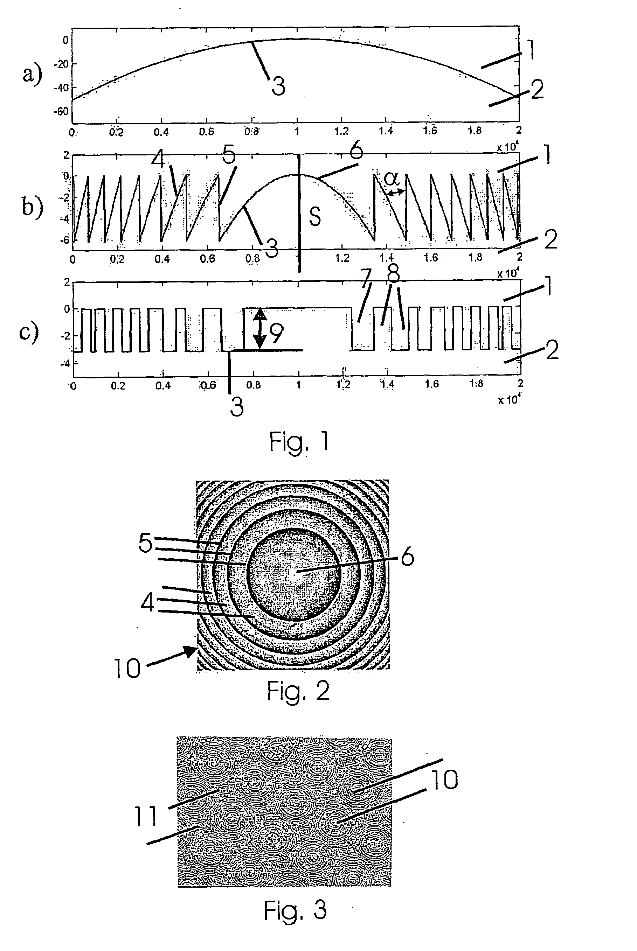

Bezüglich der Gestaltung entsprechender Gitter wird der Einfachheit halber auf die beiliegende Figur 1 verwiesen, wobei die obere Darstellung a) den Querschnitt einer normalen, refraktiven Linse zeigt, während die mittlere Darstellung b) schematisch den Querschnitt durch eine diffraktive Linse mit jeweils einer senkrecht zur Gitter-Hauptebene verlaufenden Flanke und einer demgegenüber schrägen Flanke je Gitterfurche zeigt. In der Darstellung c) der Figur 1 ist eine sogenannte "Binärstruktur" dargestellt, bei der Gitterfurchen und Gitterstege jeweils rechteckigen Querschnitt aufweisen und, wie Figur 1 c) erkennen läßt, die Breite der Gitterstege und die Breite der Gitterfurchen sich von der Linsenmitte zum Rand der Linse zu vermindert. Alle drei in Figur 1 gezeigten Linsenformen erzeugen, wenn man auf eine bestimmte Wellenlänge abstellt, grundsätzlich den gleichen optischen Effekt. Die Besonderheit der erfindungsgemäß vorgeschlagenen diffraktiven Linsenstrukturen ist aber, daß diese - anders als refraktive Linsen - abhängig von der jeweils vorhandenen Licht-Wellenlänge einen verschiedenen visuellen Eindruck erzeugen. Trotzdem ist die Höhe der die diffraktiven Linsen gemäß Figur 1b) und Figur 1c) bildenden Struktur um ein Vielfaches geringer als die Dicke der entsprechenden refraktiven Linse gemäß Figur 1a. Erst hierdurch wird es möglich, die Linsenstruktur in eine Schichtanordnung einzugliedern ohne mit extremen, in der Praxis ausgeschlossenen Schichtdicken arbeiten zu müssen.

Wenn Linsenstrukturen gemäß der Erfindung verwendet werden, erzielt man zum einen den Vorteil, daß sich eine höhere Effizienz gegenüber holographisch hergestellten Linsenstrukturen erzeugen läßt, was zur Folge hat, daß das unter Zuhilfenahme der Linse gebildete Bild bzw. der entsprechende Dekorations- oder Sicherheitseffekt brillanter erscheinen. Weiterhin lassen sich die erfindungsgemäßen Linsenstrukturen mit sehr hoher Genauigkeit - im Vergleich zu holographisch hergestellten Strukturen - erzeugen, wodurch das visuelle Erscheinungsbild deutlich verbessert wird. Schließlich ist es durch geeignete Wahl der Gitterkonstanten (Gitterfrequenz, Gittertiefe etc.) bei den erfindungsgemäßen Linsenstrukturen möglich, spezielle Farbeffekte zu erzielen bzw. die Farbeffekte über das Gesamtprofil der Linsenstruktur in vorgegebener Weise zu steuern. Weiterhin sei in diesem Zusammenhang auf die Möglichkeit hingewiesen, die Linsenstrukturen mit anderen, optische Effekte bewirkenden Elementen, z.B. andersartigen Beugungsstrukturen zur Erzielung von Bewegungseffekten, Flips oder dergleichen oder mit Dünnschichtanordnungen zur Erzielung besonderer Farbeffekte zu kombinieren, wie dies allgemein z.B. von optisch variablen Sicherheitselementen bekannt ist. Linsenstrukturen gemäß der Erfindung haben somit gegenüber holographisch erzeugten Linsenstrukturen neben der Gemeinsamkeit der geringen "Dicke" eine große Vielzahl von Vorteilen.

Schichtanordnungen mit einer Linsenstruktur gemäß der Erfindung können sowohl bei Betrachtung in Transmission als auch bei Reflexion entsprechende spezielle optische Effekte erzeugen. Um eine Betrachtung in Transmission zu ermöglichen, ist nach der Erfindung vorgesehen, daß die der Grenzfläche benachbarten Schichten transparent sind und einen deutlich, vorzugsweise um wenigstens 0,2 verschiedenen Brechungsindex aufweisen. Durch den Unterschied im Brechungsindex erreicht man, daß die Linsenwirkung der Grenzfläche trotz des Umstandes, daß das Licht durch die Schichtanordnung hindurchtritt, doch einen deutlich sichtbaren Effekt bewirkt. Speziell beim Arbeiten in Transmission kann die Gitterstruktur einseitig nicht abgedeckt sein sondern an Luft anschließen.

Es liegt weiter im Rahmen der Erfindung, daß die Grenzfläche zumindest bereichsweise mit einer reflexionserhöhenden Schicht versehen ist, wobei die reflexionserhöhende Schicht zweckmäßig eine, beispielsweise aufgedampfte, Metallschicht ist. Es wäre jedoch durchaus denkbar, als reflexionserhöhende Schicht eine transparente Schicht mit einem entsprechend hohen Brechungsindex vorzusehen, in welchem Falle man in gewissem Umfang eine Durchlässigkeit der Schichtanordnung erreichen könnte. Auch Dünnschichtanordnungen der bekannten Kombinationen oder Halbleiterschichten könnten verwendet werden.

Bei der bekannten Kreditkarte umfaßt das von einer Schichtanordnung der gattungsgemäßen Art gebildete holographisch erzeugte Sicherheitselement lediglich eine kreisförmige Linsenstruktur. Verwendet man nun dagegen eine diffraktive Linsenstruktur gemäß der Erfindung, ist es möglich, über die Fläche der Schichtanordnung mehrere Linsenstrukturen verteilt anzuordnen, wodurch sich einerseits wesentlich interessantere Effekte (für den Fall der Verwendung zu Dekorationszwecken) erzielen lassen oder, sofern die Linsenstruktur Teil eines Sicherheitselementes ist, auch die Sicherheitswirkung erhöhen läßt. Zweckmäßig sind in einem derartigen Fall die mehreren Linsenstrukturen in einem Raster angeordnet, wodurch die Verifikation erleichtert werden kann. Aber auch eine zumindest bereichsweise Überlappung der Linsenstrukturen wäre denkbar, wobei eine Verschachtelung sogar in der Art möglich wäre, daß abhängig vom Betrachtungswinkel unterschiedliche Linsenstrukturen in Erscheinung treten.

Besonders einfach wird die Herstellung entsprechender Linsenstrukturen oder Linsenstruktur-Anordnungen, wenn, wie nach der Erfindung vorgesehen, die Linsenstrukturen im wesentlichen kreisförmig mit konzentrisch verlaufenden Gitterlinien ausgebildet sind.

Für die Praxis als zweckmäßig hat es sich erwiesen, wenn die Linsenstrukturen einen Durchmesser zwischen 0,15 und 300 mm, vorzugsweise zwischen 3 und 50 mm aufweisen.

Wenn, wie nach der Erfindung weiter vorgesehen, die Gittertiefe der Linsenstrukturen kleiner als 5 µm, vorzugsweise kleiner als 3 µm ist, lassen sich derartige Gitterstrukturen ohne Probleme in die üblicherweise bei Transfer- oder Laminierfolien vorgesehenen Lackschichten, die in etwa diese Dicke haben, einbringen.

Es wird nach der Erfindung vorgeschlagen, daß die Binärstruktur über die gesamte Fläche der Linsenstruktur in etwa die gleiche Tiefe besitzt. Hierdurch wird die Herstellung besonders einfach. Über die Wahl der Tiefe der Binärstruktur läßt sich dabei Einfluß auf die Farbe nehmen, die bei Betrachtung der Linsenstruktur für den Beobachter entsteht.

Schließlich kann es vorteilhaft sein, wenn die transparente(n), dem Beobachter zugeheftete(n) Schicht(en) pigmentfrei eingefärbt ist (sind).

Weitere Merkmale, Einzelheiten und Vorteile der Erfindung ergeben sich aus der folgenden Beschreibung bevorzugter Ausführungsbeispiele an Hand der Zeichnung.

Es zeigen:
- Figur 1: schematisch und im Querschnitt
a) eine refraktive Linse
b) eine diffraktive Linse mit im Querschnitt etwa dreieckförmigen Gitterfurchen,
c) eine Linse mit einer diffraktiven Binärstruktur;
- Figur 2: in schematischer Draufsicht ein in einer Schichtanordnung gemäß der Erfindung vorgesehenes Sicherheits- oder Dekorationselement mit einer erfindungsgemäßen Linsenstruktur, und
- Figur 3: eine Darstellung ähnlich Figur 2, allerdings in kleinerem Maßstab und bei einer Schichtanordnung mit mehreren, in Form eines Rasters angeordneten Linsenstrukturen.

In den schematischen Querschnittsdarstellungen der Figur 1 ist gezeigt, daß die Schichtanordnung gemäß der Erfindung jeweils zwei Materialschichten 1, 2 aufweist, die zwischen sich eine Grenzfläche 3 bilden, die beispielsweise mit einer Metallisierung, z.B. einer im Vakuum aufgedampften Metallschicht, versehen sein kann. Für bestimmte Anwendungsfälle kann dabei eine der Materialschichten 1, 2 durch Luft gebildet sein. Der Durchmesser der Linsen in Figur 1 ist auf der x-Achse in beliebig angenommenen Einheiten gezeigt, da es auf die genaue Größe bzw. den genauen Durchmesser der Linsenstrukturen nicht ankommt. Der Durchmesser der Linsenstrukturen liegt jedoch im allgemeinen zwischen 0,15 und 300 mm, vorzugsweise zwischen 3 und 50 mm, wobei die Brennweite der Linsen üblicherweise zwischen dem Wert des Linsendurchmessers und dem fünffachen dieses Wertes liegt.

Auf der y-Achse in Figur 1 ist jeweils die Dicke bzw. die Höhe der entsprechenden Schicht 1, 2 bzw. Struktur aufgetragen, wobei es sich bei den angegebenen Werten um die Phasendifferenz in Radiant handelt. Bei Verwendung einer bestimmten Licht-Wellenlänge (z.B. 550 nm für die maximale Empfindlichkeit des menschlichen Auges) läßt sich aus dieser Phasendifferenz in bekannter Weise (auch unter Berücksichtigung der jeweiligen Brechungsindices) die geometrische Tiefe berechnen. Aus einem Vergleich der Figur 1a) mit den Figuren 1b) und 1c) ist ohne weiteres ersichtlich, daß die Dicke der Schichtanordnung gemäß Figur 1a) wenigstens zehn Mal so groß sein muß wie die Dicke der Schichtanordnung gemäß Figur 1b) und sogar etwa zwanzig Mal so groß wie die Dicke der Schichtanordnung der Figur 1c). Daß die Schichtanordnungen der Figuren 1b) und 1c) wesentlich dünner sein können als die der Figur 1a) beruht auf der geringeren Gesamthöhe 9 der von der Grenzschicht 3 bestimmten Linsenstruktur, die sich nur über eine Höhe erstreckt, die umgerechnet (für ein System n=1,5/n=1 in Transmission) bei Figur 1b) etwa der doppelten Wellenlänge, in Figur 1c) sogar nur etwa der einfachen Wellenlänge entspricht.

Bei den Schichten 1 und 2 der Schichtanordnung handelt es sich im allgemeinen um Lackschichten entsprechender Zusammensetzung, wobei wenigstens die dem Beobachter zugekehrte Lackschicht (im vorliegenden Falle im allgemeinen die Schicht 1) weitgehend transparent sein muß, allerdings dabei gefärbt sein kann. Für bestimmte Anwendungsfälle kann eine der Schichten eine Kleberschicht sein oder die dem Betrachter zugekehrte Schicht sogar entfallen.

Wenn die Grenzschicht 3 mit einer Metallisierung oder einer sonstigen, stark reflektierenden Beschichtung versehen ist, kann die Schicht 2 ebenfalls transparent, aber auch durchscheinend oder undurchsichtig sein. Soll dagegen die Schichtanordnung gemäß der Erfindung in Transmission eingesetzt werden, beispielsweise zur Abdeckung eines auf einem Substrat vorhandenen sichtbaren Merkmals, muß auch die Schicht 2 transparent sein. In diesem Falle wird die Grenzfläche 3 nicht mit einer- im allgemeinen undurchsichtigen - Metallisierung versehen werden. Statt dessen wird man den Brechungsindex der beiden transparenten Schichten 1 und 2 derart unterschiedlich wählen (wobei die Differenz des Brechungsindex vorzugsweise wenigstens 0,2 betragen sollte), daß trotz Verwendung zweier transparenter Schichten der durch die Grenzfläche 3 erzeugte Effekt optisch hinreichend deutlich sichtbar wird.

Die Linsenstruktur gemäß Figur 1b wird üblicherweise in einem sogenannten "Direktschreib-Verfahren" erzeugt, d.h. in einem Verfahren, bei dem entweder mittels eines Lasers das Material gemäß dem gewünschten Profil abgetragen wird oder mittels eines Lasers oder einer Elektronenstrahl-Lithographieeinrichtung ein Photoresist gemäß dem gewünschten Profil belichtet wird und anschließend durch Entwicklung des Photoresists das gewünschte Profil bzw. dessen Negativprofil erhalten wird. Diese Vorgehensweise bietet den Vorteil, daß sich sehr unterschiedliche Gitterstrukturen und insbesondere Gitterquerschnitte, z.B. auch für bestimmte Anwendungsfälle sogenannte Blaze-Gitter, erzeugen lassen, wobei insbesondere erreicht werden kann, daß der Winkel α zwischen den in Figur 1b) schräg verlaufenden Flanken 4 der Gitterfurchen und einer Senkrechten S auf die Hauptebene der Linsenstruktur sich- wie aus Figur 1b) deutlich ersichtlich - kontinuierlich vom Zentrum der Linse aus nach außen verändert, und zwar in dem Sinn, daß die zu der Senkrechten S etwa parallelen Flanken 5 der Gitterfurchen gleichsam nur Unstetigkeitsstellen in einem ansonsten im wesentlichen stetigen Linsenprofil, welches durch die jeweils anderen, schrägen Flanken 4 der Gitterfurchen sowie den zentrischen, paraboloidförmigen Abschnitt 6 der Grenzfläche 3 gebildet ist, darstellen.

Derartige Linsenstrukturen sowie die Art ihrer Berechnung sind grundsätzlich in der Literatur beschrieben, weshalb hierauf nicht näher eingegangen werden soll.

Dabei ist auch die Möglichkeit zu erwähnen, anstelle der gemäß Figur 1 b über die Höhe 9 kontinuierlichen schrägen Flanken 4 eine stufenförmige Anordnung zu verwenden, bei welcher die die Stufen bildenden Flächen die Flanken 4 in ihrer optischen Wirkung annähern. Derartige Gitterstrukturen können sowohl in sog. Direkt-Schreibverfahren als auch über geeignete Masken-Techniken erzeugt werden, wobei die Zahl der Stufen abhängig von dem angestrebten Ergebnis variiert werden kann. Für eine Vielzahl von Anwendungsfällen genügt dabei bereits eine Aufteilung in vier oder acht Stufen. Bei hohen Qualitätsanforderungen ist es aber beispielsweise auch möglich, vierundsechzig Stufen oder eine Stufenzahl gemäß einer höheren Potenz von 2 vorzusehen.

Die Binärstruktur gemäß Figur 1c) wird unter Verwendung entsprechender Masken hergestellt. Das wesentliche Charakteristikum der Binärstruktur gemäß Figur 1c) ist darin zu sehen, daß sowohl die Gitterfurchen 7 als auch die Gitterstege 8 jeweils im Querschnitt im wesentlichen rechteckig sind. Eine weitere Besonderheit der Struktur gemäß Figur 1c) ist darin zu sehen, daß die Gittertiefe 9 über die gesamte Linsenstruktur einheitlich ist, was insbesondere bei der Herstellung den Vorteil bietet, daß weder unterschiedliche Einwirkungszeiten des das Material entfernenden Mittels vorgesehen noch mit unterschiedlichen Intensitäten des durch die entsprechende Maske auf das Substrat einwirkenden Mittels gearbeitet werden muß.

In Figur 2 ist schematisch (tatsächlich sind die Abstände der Gitterlinien wesentlich geringer) ein linsenartiges Element gezeigt, das mit einer Linsenstruktur gemäß Figur 1b) hergestellt ist, wobei die Draufsicht der Figur 2 deutlich den sich ständig vermindernden Abstand zwischen den einzelnen Gitterstegen bzw. die sich ständig vom Zentrum der kreisförmigen Linse zu deren Rand zu erhöhende Gitterfrequenz erkennen läßt. Zusätzlich ist auch die Neigung der in der Draufsicht der Figur 2 sichtbaren Gitterflanken 4 von dem Zentrum der Linse nach außen ständig und im wesentlichen kontinuierlich verändert. Auch die zur Linsen-Hauptebene senkrechten Gitterflanken 5 sind in Form dunkler Linien in Figur 2 deutlich sichtbar.

Die Figur 3 zeigt eine weitere Möglichkeit, wie in einer erfindungsgemäßen Schichtanordnung diffraktive Linsenstrukturen vorgesehen sein können.

In dem Ausführungsbeispiel der Figur 3, das beispielsweise bei einer dekorativen Transfer- oder Laminierfolie verwirklicht sein könnte, sind über die Oberfläche der Folie verteilt in mehreren, in einem Raster angeordneten Flächenbereichen kreisförmige Linsenstrukturen angeordnet, die prinzipiell den Linsenstrukturen der Figur 2 entsprechen können. Die Anordnung ist dabei so gewählt, daß nicht die äußeren Gitterfurchen entsprechend Figur 2 teilweise abgeschnitten sind. Die Linsenstrukturen 10 der Figur 3 sind vielmehr jeweils insgesamt kreisförmig erhalten. Die hierdurch bei einer Aneinanderreihung entsprechender Linsenstruktur-Kreise entstehenden Zwischenräume in Form von sphärischen Quadraten sind bei der Schichtanordnung der Figur 3 durch entsprechend gestaltete Beugungsstrukturen 11 ausgefüllt, die durchaus ebenfalls einen Linseneffekt erzeugen können, wobei beispielsweise die Linsenstrukturen 10 den Effekt von Sammellinsen zeigen, während die Strukturen 11 als Zerstreuungslinsen wirken, wodurch sich der optische Effekt beider Linsenarten quasi verstärken läßt.

Es ist selbstverständlich möglich, durch entsprechende Kombination der unterschiedlichsten Linsenstrukturen Schichtanordnungen mit komplexen, optisch wirksamen Effekten zu erzeugen, wobei es natürlich auch denkbar ist, diffraktive Strukturen zusätzlich und bereichsweise vorzusehen, die völlig andersartige Effekte, beispielsweise Bewegungseffekte, Flips etc., generieren. Auch ist es denkbar, die Linsenstrukturen und/oder sonstige diffraktive Strukturen mit einer Dünnschichtfolge mit speziellen Farben, z.B. OVI, oder mit Halbleiterschichten zu kombinieren, um so spezielle Farbwechseleffekte zu erzielen.

Besonders interessante Gestaltungen der Schichtanordnungen ergeben sich dann, wenn die Grenzschicht 3 nur teilweise mit einer Metallisierung versehen ist, wobei z.B. eine Demetallisierung im Register mit den Linsenstrukturen vorgesehen sein kann.

Weiterhin müssen selbstverständlich die Linsenstrukturen nicht, wie dies in der Zeichnung im allgemeinen dargestellt ist, jeweils kreisförmig sein. Ein Vorteil der Verwendung diffraktiver Linsenstrukturen ist gerade der, daß diese auch anderen Formen (sogenannten Freiformflächen) überlagert werden können, um so beispielsweise drei-dimensional erscheinende Gebilde zu generieren. Weiterhin wäre es z.B. auch denkbar, die Linsenstruktur der Figur 2 zu unterteilen und in anderer Weise die Teile wieder zusammenzusetzen, wodurch sich ebenfalls sehr interessante optische Effekte erzielen lassen.

## Patentansprüche

1. Schichtanordnung, insbesondere für Transfer- oder Laminierfolien, welche wenigstens zwei aufeinanderfolgende Materialschichten aufweist, von denen wenigstens die bei Gebrauch dem Beobachter zugekehrte(n) Schicht(en) transparent ist (sind) und zwischen denen eine Grenzfläche ausgebildet ist, welche wenigstens in einem Flächenbereich mit einer einen linsenartigen Vergrößerungs- oder Verkleinerungseffekt erzeugenden, beugungsoptisch wirksamen Struktur versehen ist,
**dadurch gekennzeichnet,**
**daß** die den linsenartigen Effekt erzeugende beugungsoptisch wirksame Struktur (4, 5, 6;7, 8) eine sich hinsichtlich ihrer Gitterfrequenz und gegebenenfalls weiterer Gitterkonstanten über den Flächenbereich kontinuierlich verändernde Gitterstruktur ist, die entweder eine Binärstruktur oder derart gestaltet ist (Figur 1 b), daß die jeweils einen Flanken (5) der Gitterfurchen parallel zueinander und etwa parallel zu einer Senkrechten (S) auf die Hauptebene der Grenzschicht verlaufen, während sich der Winkel (α) der jeweils anderen Flanken (4) der Gitterflächen gegenüber einer Senkrechten (S) auf die Hauptebene der Grenzschicht (3) über den Flächenbereich im wesentlichen kontinuierlich ändert, wobei die Gittertiefe (9) der Gitterstrukturen höchstens 10 µm beträgt.

2. Schichtanordnung nach Anspruch 1,
**dadurch gekennzeichnet,**
**daß** die der Grenzfläche (3) benachbarten Schichten (1, 2) transparent sind und einen unterschiedlichen, vorzugsweise um wenigstens 0,2 verschiedenen Brechungsindex aufweisen.

3. Schichtanordnung nach Anspruch 1,
**dadurch gekennzeichnet,**
**daß** die Grenzfläche (3) zumindest bereichsweise mit einer reflexionserhöhenden Schicht versehen ist.

4. Schichtanordnung nach Anspruch 3,
**dadurch gekennzeichnet,**
**daß** die reflexionserhöhende Schicht eine Metallschicht ist.

5. Schichtanordnung nach einem der vorhergehenden Ansprüche,
**dadurch gekennzeichnet,**
**daß** über die Fläche der Schichtanordnung mehrere Linsenstrukturen (10, 11) verteilt angeordnet sind.

6. Schichtanordnung nach Anspruch 5,
**dadurch gekennzeichnet,**
**daß** die mehreren Linsenstrukturen (10, 11) in einem Raster angeordnet sind.

7. Schichtanordnung nach einem der vorhergehenden Ansprüche,
**dadurch gekennzeichnet,**
**daß** die Linsenstrukturen (10) im wesentlichen kreisförmig mit konzentrisch verlaufenden Gitterlinien ausgebildet sind.

8. Schichtanordnung nach einem der vorhergehenden Ansprüche,
**dadurch gekennzeichnet,**
**daß** die Linsenstrukturen (10) einen Durchmesser zwischen 0,15 und 300 mm, vorzugsweise zwischen 3 und 50 mm aufweisen.

9. Schichtanordnung nach einem der vorhergehenden Ansprüche,
**dadurch gekennzeichnet,**
**daß** die Gittertiefe (9) der Linsenstrukturen kleiner als 5 µm, vorzugsweise kleiner als 2 µm ist.

10. Schichtanordnung nach einem der vorhergehenden Ansprüche,
**dadurch gekennzeichnet,**
**daß** die Binärstruktur über die gesamte Fläche der Linsenstruktur (10) in etwa die gleiche Tiefe (9) besitzt.

11. Schichtanordnung nach einem der vorhergehenden Ansprüche,
**dadurch gekennzeichnet,**
**daß** die transparenten, dem Beobachter zugekehrten Schichtn pigmentfrei eingefärbt sind.

## Claims

1. Layer arrangement, in particular for transfer or laminating films, having at least two consecutive material layers, of which at least the layer or layers facing the observer during use is or are transparent and between which an interface is formed which is provided, at least in a surface area, with a structure which is active in terms of optical diffraction and produces a lens-type magnification or reduction effect, **characterized in that** the structure (4, 5, 6; 7, 8), which is active in terms of optical diffraction and produces the lens-type effect, is a grating structure which varies continuously over the surface area with respect to its grating frequency and possibly further grating constants and is either a binary structure or designed in a manner such (Figure 1b) that the in each case first flanks (5) of the grating grooves extend parallel to one another and approximately parallel to a perpendicular (S) to the main plane of the interface, whereas the angle (α) of the in each case second flanks (4) of the grating faces with respect to a perpendicular (S) to the main plane of the interface (3) varies substantially continuously over the surface area, the grating depth (9) of the grating structures being not more than 10 µm.

2. Layer arrangement according to Claim 1, **characterized in that** the layers (1, 2) adjoining the interface (3) are transparent and have a different refractive index, preferably one that differs by at least 0.2.

3. Layer arrangement according to Claim 1, **characterized in that** the interface (3) is provided with a reflection-increasing layer at least in regions.

4. Layer arrangement according to Claim 3, **characterized in that** the reflection-increasing layer is a metal layer.

5. Layer arrangement according to one of the preceding claims, **characterized in that** a plurality of lens structures (10, 11) are arranged such that they are distributed over the area of the layer arrangement.

6. Layer arrangement according to Claim 5, **characterized in that** the plurality of lens structures (10, 11) are arranged in a grid.

7. Layer arrangement according to one of the preceding claims, **characterized in that** the lens structures (10) are designed such that they are substantially circular with concentrically extending grating lines.

8. Layer arrangement according to one of the preceding claims, **characterized in that** the lens structures (10) have a diameter of between 0.15 and 300 mm, preferably between 3 and 50 mm.

9. Layer arrangement according to one of the preceding claims, **characterized in that** the grating depth (9) of the lens structures is less than 5 µm, preferably less than 2 µm.

10. Layer arrangement according to one of the preceding claims, **characterized in that** the depth (9) of the binary structure is approximately the same over the entire area of the lens structure (10).

11. Layer arrangement according to one of the preceding claims, **characterized in that** the transparent layers facing the observer are dyed without pigment.

## Revendications

1. Système de couches, en particulier pour des films de transfert ou feuilles à laminer, qui présente au moins deux couches de matériau successives, dont au moins la(les) couche(s) adjacente(s) lors de l'utilisation à l'observateur est(sont) transparente(s), et entre lesquelles est réalisée une surface de délimitation qui est dotée au moins dans une zone de surface d'une structure efficace d'un point de vue de la diffraction produisant un effet d'agrandissement ou de rétrécissement de type lentille,
**caractérisé en ce que**
la structure (4, 5, 6 ; 7, 8) efficace d'un point de vue de la diffraction produisant l'effet de type lentille est une structure de réseau qui se modifie constamment au niveau de sa fréquence de réseau et éventuellement au niveau des autres constantes de réseau au-dessus de la zone de surface, qui est soit une structure binaire, soit est conçue (Figure 1b) de sorte que les côtés (5) respectifs des sillons de réseau s'étendent parallèlement les uns aux autres et approximativement parallèlement à une verticale (S) sur le plan principal de la couche de délimitation, tandis que l'angle (α) des autres côtés (4) respectifs des surfaces de réseau se modifie essentiellement continuellement par rapport à une verticale (S) sur le plan principal de la couche de délimitation (3) au-dessus de la zone de surface, la profondeur de réseau (9) des structures de réseau s'élevant au maximum à 10 µm.

2. Système de couches selon la revendication 1,
**caractérisé en ce que**
les couches (1, 2) adjacentes à la surface de délimitation (3) sont transparentes et comprennent un indice de réfraction variable, de préférence différent d'au moins 0,2.

3. Système de couches selon la revendication 1,
**caractérisé en ce que**,
la surface de délimitation (3) est dotée au moins partiellement d'une couche augmentant la réflexion.

4. Système de couches selon la revendication 3,
**caractérisé en ce que**,
la couche augmentant la réflexion est une couche de métal.

5. Système de couches selon l'une quelconque des revendications précédentes,
**caractérisé en ce que**,
plusieurs structures de lentilles (10, 11) sont réparties à la surface du système de couches.

6. Système de couches selon la revendication 5,
**caractérisé en ce que**,
les nombreuses structures de lentilles (10, 11) sont disposées dans une trame.

7. Système de couches selon l'une quelconque des revendications précédentes,
**caractérisé en ce que**,
les structures de lentilles (10) sont configurées essentiellement en forme de cercle avec des lignes de réseau s'étendant concentriquement.

8. Système de couches selon l'une quelconque des revendications précédentes,
**caractérisé en ce que**,
les structures de lentilles (10) présentent un diamètre compris entre 0,15 et 300 mm, de préférence entre 3 et 50 mm.

9. Système de couches selon l'une quelconque des revendications précédentes,
**caractérisé en ce que**,
la profondeur de réseau (9) des structures de lentilles est inférieure à 5 µm, de préférence inférieure à 2 µm.

10. Système de couches selon l'une quelconque des revendications précédentes,
**caractérisé en ce que**,
la structure binaire possède sur toute la surface de la structure de lentille (10) approximativement la même profondeur (9).

11. Système de couches selon l'une quelconque des revendications précédentes,
**caractérisé en ce que**
la(les) couche(s) transparente(s) adjacente(s) à l'observateur est/sont colorée(s) sans pigment.
